# FASCICULE DE BREVET EUROPEEN

(11) **EP 0 600 767 B1**
(45) Date de publication et mention de la délivrance du brevet: **30.07.1997**
(21) Numéro de dépôt: 93402854.9
(22) Date de dépôt: 24.11.1993
(51) Int. Cl.: C08G 18/62, C09J 175/04, C08G 18/10

(54) **Compositions adhésives thermofusibles réticulables à l'humidité**
Feuchtigkeitshärtbare Heissschmelzklebstoffzusammensetzungen
Moisture-curable hot-melt adhesive compositions

(30) Priorité: 04.12.1992 FR 9214634
(43) Date de publication de la demande: 08.06.1994
(73) Titulaire: ELF ATOCHEM S.A., 92800 Puteaux (FR)
(72) Inventeur: Chenard, Jean-Yves, F-64000 Pau (FR); Dupic, Jean-Pierre, F-64300 Orthez (FR); Jammet, Jean-Claude, F-27190 Glisolles (FR)
(74) Mandataire: Neel, Henry

(56) Documents cités:
- EP-A- 0 380 379

## Description

La présente invention a pour objet des compositions adhésives thermofusibles. Plus particulièrement, la présente invention concerne ces compositions adhésives thermofusibles qui présentent la particularité de conduire, après application, à des produits réticulants en quelques jours, de façon irréversible, sous l'influence de l'humidité atmosphérique.

Un adhésif thermofusible ou "hot-melt" est une formulation solide à température ordinaire mise en oeuvre à l'état fondu (vers 180°C env.) qui durcit par refroidissement. Ces adhésifs thermofusibles comportent généralement deux constituants principaux: un polymère thermoplastique -responsable des bonnes propriétés mécaniques- et une résine tackifiante qui intervient au niveau adhésion, pégosité (tackiness) à chaud, fluidité et mouillabilité. On y ajoute le plus souvent un certain nombre d'additifs tels que cires, stabilisants, charges... Les polymères thermoplastiques les plus utilisés sont les copolymères éthylène-acétate de vinyle (ci-après dénommés EVA), poly-α-oléfine atactique (APAO), caoutchouc thermoplastique, et autres. Les résines tackifiantes appartiennent principalement à trois grandes familles: les colophanes (et leurs dérivés), les résines terpéniques et les résines dérivées de pétrole (aliphatiques, aromatiques, et autres). Ces adhésifs thermofusibles présentent, d'un point de vue industriel, un grand nombre d'avantages qui expliquent leur utilisation croissante:
- mise en oeuvre aisée dans des installations automatisées,
- temps de prise court (quelques secondes) autorisant des vitesses de collage élevées,
- très bonne adhésion sur une grande variété de substrats: papier, bois, carton, textiles, plastiques, et autres;
- coût raisonnable.

Toutefois, de par leur nature thermoplastique même, les adhésifs thermofusibles n'offrent que des tenues en température sous charge limitées le plus souvent à 70-80°C (100°C maxi), ce qui leur interdit certaines applications telles que: automobile, bâtiment, textile, placage de bois et reliure haut de gamme.

Un grand nombre de travaux ont été effectués afin de remédier à cet inconvénient.

Depuis quelques années, les chimistes ont exploré plusieurs voies pour tenter de remédier à ces défauts. On peut les ranger en produits bi-composants et produits mono-composants. On entend par bi-composant une formule qui est nécessairement présentée sous la forme de deux produits qu'il faut mélanger au moment de l'emploi, parce que le mélange est en soi réactif et que ses propriétés évoluent dès qu'il est réalisé. Le produit mono-composant est constitué, comme son nom l'indique, par un seul produit, stable au stockage, au moins pendant une durée raisonnable. La voie des produits bi-composants, notamment à base d'époxydes, est lourde et de mise en oeuvre délicate. Celle des produits mono-composants est plus développée, et c'est dans cette voie que la plupart des améliorations ont trouvé le jour.

On a ainsi pensé à utiliser un polymère thermoplastique à point de fusion élevé. Les produits commerciaux (base polyamides ou polyesters) possèdent une bonne tenue thermique. Mais d'autres inconvénients apparaissent:
- difficulté de mise en oeuvre (viscosité trop élevée),
- dégradation thermique avant dépose du fait des températures de mise en oeuvre très élevées nécessaires,
- temps ouverts (temps disponible pour effectuer le collage entre le moment où l'adhésif fondu est déposé sur le premier support et le moment où l'adhésif devient trop visqueux à cause du refroidissement pour coller correctement le deuxième support) faibles,
- adhésion médiocre sur certains substrats ("glaçage").

On a aussi pensé à l'utilisation de formules réactives réticulant après collage. On peut distinguer plusieurs cas, explicités ci-après.

La réticulation thermique est, par exemple, obtenue par ajout d'isocyanate bloqué dans une formulation comportant des groupes hydroxyles. Il est nécessaire, pour effectuer la réticulation, de réchauffer l'adhésif au-dessus de sa température d'application. Au cours de cette phase, l'adhésif repasse par l'état liquide: il est donc indispensable d'assurer le maintien des pièces à coller. Cette cuisson dure le plus souvent de quelques minutes à quelques dizaines de minutes (cf. par exemple brevets européens 0294271 ou 0302620). On perd là l'un des principaux avantages des adhésifs thermofusibles -collage quasi instantané permettant des cadences élevées- et l'utilisation de ces produits est réservée à des cas particuliers.

Les formulations à réticulation chimique par l'oxygène de l'air font appel à des alkylboranes. Elles ont un caractère plus expérimental qu'industriel.

La réticulation par irradiation U.V. a été proposée par Dynamit Nobel avec des polyesters sensibles aux radiations U.V., qui autorisent une mise en oeuvre vers 50°C, et sur le même principe par SHELL avec leur produit KRATON 1320 X. Cette voie n'est applicable qu'à la réticulation de faibles épaisseurs de produit, et l'application en est très spécifique (par exemple, application aux produits d'enduction).

Dans le cas de la réticulation à température ordinaire, aucune manipulation du joint n'est nécessaire après collage: la mise en oeuvre est donc aussi simple que celle d'un thermofusible classique. La réticulation intervient souvent, sous l'effet de l'humidité atmosphérique, grâce à des fonctions isocyanates en excès présentes dans la formulation. Les produits commerciaux de ce type (cf. par exemple brevet européen 0107097 - Fuller) utilisés en complexage ou dans l'automobile sont des oligomères polyuréthanes à terminaisons isocyanates. En raison de la stabilité limitée des fonctions isocyanates, ces produits sont mis en oeuvre à plus basse température (typiquement 130°C). Tenue thermique et résistance chimique après réticulation sont très bonnes. La rapidité de prise (de l'ordre d'une minute) et la tenue initiale au fluage (pendant les premières 24 heures) très inférieures à celles des adhésifs thermofusibles connus jusqu'à présent constituent par contre -avec la nécessité d'un stockage à l'abri de l'humidité- les points faibles de cette solution. On trouvera par exemple dans le brevet européen 0293602 (Fuller) certains des remèdes possibles.

EP-A-0 380 379 décrit une composition adhésive thermofusible réticulable à base de copolymère EVA possédant des fonctions hydroxyles et de polyisocyanate, se présentant sous la forme d'un prépolymère contenant dse fonctions isocyanate libres, résultant de la réaction du copolymère EVA contenant des fonctions hydroxyles et d'un polyisocyanate en excès. Ce copolymère EVA hydroxylé contient de 20 à 150 méq OH/ 100g de polymère qui réagissent avec les fonctions isocyanate en excès lors de la polymérisation, conduisant au durcissement, par réaction des groupes NCO avec l'eau ambiante.

Aucun document de l'état de la technique n'enseigne ni ne suggère la composition selon la présente invention.

La présente invention décrit des adhésifs thermofusibles réticulant en quelques jours sous l'influence de l'humidité atmosphérique. Ces adhésifs offrent après réticulation une tenue en température sous charge ≥ 140°C (soit un gain d'au moins 70°C par rapport aux produits non réticulables), tout en conservant les avantages des adhésifs thermofusibles traditionnels en particulier un temps de prise court, une bonne tenue au fluage sous charge à 25°C immédiatement après collage et une bonne souplesse même après réticulation complète. Les compositions améliorées selon l'invention font appel à un polymère de base comportant des groupes hydroxyles. Ce sont ces groupes hydroxyles qui, après pré-réaction totale avec un excès de diisocyanate, permettent d'obtenir une réticulation lente sous l'effet de l'humidité atmosphérique.

La présente invention est décrite dans la revendication 1.

La présente invention fournit aussi une composition adhésive thermofusible, à base d'un copolymère EVA et de polyisocyanate, le copolymère EVA étant un copolymère d'indice de fluidité à 190°C compris entre 100 et 1 000 et comprenant, par rapport au poids dudit copolymère:
1) 60 à 90% d'éthylène,
2) 10 à 40% d'acétate de vinyle,
3) 5 à 20 méq OH d'un termonomère éthyléniquement insaturé portant au moins une fonction hydroxyle primaire par mole,
ladite composition ne contenant substantiellement pas de fonction hydroxyle libre.
Ce copolymère EVA auquel on a ajouté un termonomère peut être désigné indifféremment par copolymère EVA, terpolymère, polymère selon l'invention et autres.

De préférence, ledit copolymère EVA comprend, par rapport au poids dudit copolymère:
1) 65 à 90% d'éthylène,
2) 20 à 35% d'acétate de vinyle,
3) 10 à 20 méq OH d'un termonomère éthyléniquement insaturé portant au moins une fonction hydroxyle primaire par mole.

Une autre forme préférée est décrite dans la revendication 2.

Avantageusement, ledit polymère a un indice de fluidité à 190°C compris entre 400 et 800.

Le termonomère hydroxylé copolymérisé avec l'éthylène et l'acétate de vinyle a avantageusement pour formule: 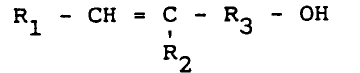 dans laquelle:
- R₁: représente l'hydrogène ou un radical hydrocarboné contenant de 1 à 8 atomes de carbone;
- R₂: représente l'hydrogène ou un radical hydrocarboné contenant de 1 à 4 atomes de carbone;
- R₃: représente un groupement ester ou (CH₂)ₙ, n étant compris entre 0 et 10, inclus.

Parmi ces termonomères, on peut citer: l'alcool allylique, l'alcool oléylique, l'alcool vinylique, le méthacrylate de 2-hydroxyéthyle (HEMA et l'acrylate de 2-hydroxyéthyle (HEA). On préfère particulièrement le HEMA et le HEA.

Le terme "méq OH" signifie "milli-équivalents d'OH", c'est-à-dire le nombre de millimole (10⁻³ mol) de fonction hydroxyle-OH pour 100 g de copolymère. Ainsi, par exemple, un copolymère contenant 10 millimoles de fonction-OH pour 100 g a un méq OH de 10.

Ce copolymère réagit avec un polyisocyanate, de préférence un diisocyanate, avantageusement aliphatique, cycloaliphatique ou aromatique.

Parmi les diisocyanates préférés, on peut citer le 2,4-toluylène-diisocyanate (TDI), diphénylméthane-diisocyanate (MDI), hexaméthylène-diisocyanate (HMDI) et isophorone-diisocyanate (IPDI). On utilise avantageusement le MDI.

Dans les présentes compositions, il reste des fonctions isocyanates libres. De préférence, la teneur en fonctions NCO libres est comprise entre 1 à 5% en poids de fonctions NCO libres, par rapport au poids total de l'adhésif. De préférence, cette teneur est de 2 à 3%. Cette teneur permet de réaliser un bon compromis entre la vitesse de réticulation de l'adhésif (après collage) et sa stabilité à chaud (avant collage).

Les compositions selon la présente invention peuvent en outre contenir:
- une ou plusieurs résines tackéfiantes, dans un rapport résine/polymère pouvant varier de 0 à 3. Les résines tackéfiantes préférées sont aliphatiques, aromatiques ou aliphato-aromatiques (y compris les résines terpéniques naturelles ou synthétiques) et ne contiennent pas de fonctions réactives avec les isocyanates,
- des cires, des plastifiants, des charges, des stabilisants chimiquement neutres vis-à-vis des isocyanates.

Les résines tackéfiantes ou les cires faiblement hydroxylées sont utilisables à condition de tenir compte des fonctions hydroxyles qu'elles apportent dans le calcul du rapport NCO total/OH total et de diminuer en proportion, la quantité d'alcool simple utilisée pour la réaction avec l'excès de polyisocyanate.

La présente invention a aussi pour objet un procédé de préparation d'une composition comprenant les étapes suivantes:
(i) fusion et séchage du copolymère EVA, éventuellement de la résine;
(ii) addition et réaction d'un alcool et du polyisocyanate jusqu'à obtention du taux de NCO recherché.
Ainsi, dans la pratique, on peut procéder comme suit:

Les adhésifs thermofusibles selon l'invention sont avantageusement fabriqués en une seule étape selon le procédé suivant:
- tous les constituants de la formule, à l'exception du diisocyanate et du monoalcool sont préalablement fondus à 110-130°C et séchés sous pression réduite dans un réacteur agité. Le réacteur est purgé par de l'azote sec;
- le monoalcool sec puis le diisocyanate sont alors introduits en proportions convenables et la réaction isocyanate-alcool poursuivie à 120-125°C jusqu'à obtention tention du taux de NCO théorique, ce qui demande 4 heures. A la fin de la réaction, l'adhésif thermofusible prêt à l'emploi est récupéré par coulée. Dans le cas des diisocyanates aromatiques, on opère en général en l'absence de catalyseur. Pour les diisocyanates moins réactifs (IPDI), il est possible de faire appel à des catalyseurs connus de la réaction NCO/OH tels que les sels d'étain (laurate de dibutylétain) ou les amines (diazabicyclo-octane).

Les copolymères selon l'invention sont pré-réagis à 110-130°C avec un diisocyanate classiquement utilisé tels que les 2-4-toluylène-diisocyanate (TDI), diphénylméthane-diisocyanate (MDI), hexaméthylène-diisocyanate (HMDI), isophorone-diisocyanate (IPDI). En raison de sa plus faible toxicité, c'est le MDI qui est le diisocyanate préféré de l'invention. La réaction terpolymère/diisocyanate est conduite en présence d'un fort excès molaire de diisocyanate afin d'éviter toute augmentation indésirée de la viscosité.

L'excès nécessaire dépend de la teneur en HEA du terpolymère utilisé (il augmente pour des taux croissants d'HEA) et du diisocyanate utilisé (un diisocyanate dont les deux fonctions NCO ont la même réactivité (MDI) exigent un excès molaire plus grand qu'un diisocyanate dont les deux fonctions NCO n'ont pas la même réactivité (TDI). Pour un taux d'HEA de 2% environ, on opère par exemple dans le cas du MDI avec un rapport NCO total/OH terpolymère de 15 à 25 environ. Le diisocyanate en excès est ensuite neutralisé par ajout d'un monoalcool simple (alcool laurique, alcool stéarique) ou d'un mélange monoalcool-dialcool, de telle sorte que le rapport final NCO total/OH total soit compris entre 1,5 et 2,5, et de préférence 1,8 à 2,2.

La viscosité des adhésifs de l'invention à leur température de mise en oeuvre (130°C) est typiquement de 5 à 10 Pa.s. Après stockage à 130°C pendant 4 heures, au contact de l'atmosphère, l'accroissement de viscosité des adhésifs de l'invention est de l'ordre de 10%, ce qui permet une mise en oeuvre industrielle sans problème dans les machines existantes (NORDSON MELTEX par exemple).

Ainsi, la présente invention fournit des adhésifs thermofusibles monocomposants, qui offre une facilité de mise en oeuvre, une stabilité de stockage élevée -soit plusieurs mois à 25°C et plusieurs heures à 130-140°C-, des viscosités de mise en oeuvre ≦ 10Pa.s, un temps ouvert approprié de 5 à 40 s, une cohésion initiale élevée, une température de fluage sous charge qui augmente au fur et à mesure de l'avancement de la réticulation, une souplesse du produit après réticulation complète.

Dans les exemples qui suivent, on fait référence à des tests de cohésion initiale et à des tests SAFT.

La mesure de la cohésion initiale s'opère en déposant sur une éprouvette en carton un trait d'adhésif thermofusible de diamètre approximatif 1,5 mm. On applique immédiatement une deuxième éprouvette en carton identique à la première et le joint collé ainsi réalisé est immédiatement suspendu en position verticale par son extrémité supérieure. On charge l'extrémité inférieure avec des masses de 150 g, 250 g et 350 g après 15 s, 30 s et 60 s. Le comportement du joint collé est noté de la façon suivante:
- pas de fluage: aucun déplacement des éprouvettes,
- très léger fluage: glissement de l'ordre du millimètre,
- fluage: glissement de l'ordre du centimètre,
- cohésion nulle: rupture du joint collé.
Ce test mesure la vitesse de prise de l'adhésif dans les secondes suivant le collage.

Le test SAFT est un test mesurant la température maximale supporté par un joint collé sous une charge donnée. On opère de la façon suivante: on dépose à 130°C à l'extrémité d'une éprouvette en carton de largeur 25 mm, deux cordons d'adhésif de diamètre approximatif 1 mm distants l'un de l'autre de 15 mm environ. On applique immédiatement une seconde éprouvette identique à la première et on laisse refroidir l'assemblage collé ainsi obtenu. La surface de collage ainsi obtenue est d'environ 2,5 x 2,5 = 6,25 cm². L'assemblage collé est ensuite suspendu verticalement dans une étuve, chargé avec une masse de 250 g ou 500 g puis soumis à une montée en température de 25°C à 200°C à la vitesse de 0,4°C/mn. La tenue SAFT est la température à laquelle l'assemblage cède. Ce test est effectué 1 j, 2 j, 3 j, 4 j, 5 j, 6 j après le collage. On met en évidence l'amélioration, au cours du temps, de la tenue en température du hot melt de l'invention du fait de la réticulation progressive de l'adhésif.

La teneur en isocyanate libre des adhésifs selon l'invention est exprimée ci-après en grammes de NCO pour 100 g d'adhésif. On la détermine selon la norme AFNOR 52132.

L'indice de fluidité (MI) est mesuré à 190°C, sous 2,16 kg, selon la norme ASTM D 1238-70 et exprimé en g/10 mn.

### EXEMPLE 1

On introduit dans un réacteur muni d'un agitateur à ancre, d'une double enveloppe chauffante et d'une purge vide/azote 80 g d'un terpolymère éthylène/vinylacétate/hydroxyéthylacrylate et 68,23 g de Krystalex F-85 (résine d'α-méthylstyrène de la Société Hercules). Le terpolymère a les caractéristiques suivantes: 69,3% d'éthylène, 29,1% VA, 1,6% HEA, MI = 400, Mn = 7 700, Mw = 71 000, méq OH = 13,8. Les constituants sont fondus à 125-130°C et séchés sous une pression de quelques mbars pendant 1 h 30. On introduit alors à 125°C 20,25 g de 1-dodécanol sec puis 31,52 g de MDI, soit un rapport NCO total/OH total = 2,1. On récupère après 4 h 30 de réaction, sous azote sec, un adhésif thermofusible présentant les caractéristiques initiales suivantes:
- adhésif transparent et homogène à 130°C
- viscosité à 130°C 8,7 Pa.s
- viscosité à 130°C après 4 h 30 à 130°C 9,7 Pa.s
- viscosité à 140°C 5,8 Pa.s
- teneur en NCO 2,6% (Th : 2,77%)
- cohésion initiale:
. après 15 s: très léger fluage sous 150 g
. après 30 s: pas de fluage sous 350 g
. après 1 mn: pas de fluage sous 350 g

- température SAFT:
on constate l'évolution suivante de la tenue SAFT dans le temps:

| Temps écoulé (j) | 1 | 2 | 3 | 4 | 5 | 6 |
|---|---|---|---|---|---|---|
| SAFT (250 g) | 67 | 67 | 85 | 165 | 170 | 170 |
| SAFT (500 g) | 66 | 66 | 69 | 72 | 135 | 150 |

### Essais de référence

Ces essais démontrent que c'est bien le terpolymère hydroxylé de l'invention qui est à l'origine des bonnes cohésions initiales et des tenues SAFT élevées constatées (gain de 60-70°C par rapport aux témoins).

### Essai de référence n° 1

Il est rigoureusement identique à l'essai de l'exemple 1 mais le terpolymère de l'invention est remplacé par un copolymère commercial éthylène/vinylacétate 33/400 (c'est-à-dire % VA 33, MI = 400) en quantité identique. Le rapport NCO total/OH total est de 2,3. L'adhésif thermofusible obtenu a les caractéristiques suivantes:
- transparent et homogène à 130°C
- viscosité à 130°C 7,15 Pa.s
- viscosité à 130°C après 4 h 30 à 130°C . 7,75 Pa.s
- viscosité à 140°C 4,6 Pa.s
- teneur en NCO 2,85% (Th : 3,01%)
- cohésion initiale:
. après 15 s: cohésion nulle sous 150 g
. après 30 s: cohésion nulle sous 150 g
. après 1 mn: fluage sous 150 g

- évolution de la tenue SAFT dans le temps:

| Temps écoulé (j) | 1 | 2 | 3 | 4 | 5 | 6 |
|---|---|---|---|---|---|---|
| SAFT (250 g) | 65 | 66 | 66 | 67 | 66 | 68 |
| SAFT (500 g) | 64 | 65 | 66 | 65 | 65 | 66 |

### Essai de référence n° 2

Il est identique à l'essai n° 1 mais la quantité de MDI a été réduite afin de ramener le rapport NCO total/OH total a la valeur de 2,1 utilisé dans l'exemple 1. Le copolymère éthylène/vinylacétate utilisé est le même que dans l'essai de référence n° 1. L'adhésif obtenu présente les caractéristiques suivantes:
- transparent et homogène à 130°C
- viscosité à 130°C 6,9 Pa.s
- viscosité à 130°C après 4 h 30 à 130°C 7,6 Pa.s
- viscosité à 140°C 5,1 Pa.s
- teneur en NCO 2,76%
(Th : 2,78%)
- cohésion initiale:
. après 15 s: cohésion nulle sous 150 g
. après 30 s: cohésion nulle sous 150 g
. après 1 mn: léger fluage sous 150 g

- évolution de la tenue SAFT dans le temps:

| Temps écoulé (j) | 1 | 2 | 3 | 4 | 5 | 6 | 12 | 24 |
|---|---|---|---|---|---|---|---|---|
| SAFT (250 g) | 66 | 66 | 67 | 71 | 71 | 73 | 75 | 77 |
| SAFT (500 g) | 65 | 65 | 66 | 66,5 | 67 | 67 | 67 | 67 |

### EXEMPLE 2

Le procédé est identique à celui de l'exemple 1. On introduit 80 g du même terpolymère qu'à l'exemple 1, et 69,8 g de Krystalex F-85.

Après séchage, on ajoute 16,8 g de 1-dodécanol, 1,88 g de 1-12-dodécanediol puis 31,5 g de MDI (rapport NCO/OH de 2,1). L'adhésif obtenu après 4 h 30 de réaction à 125°C présente les caractéristiques suivantes:
- transparent et homogène à 130°C
- viscosité à 130°C 9,25 Pa.s
- viscosité à 130°C après 4 h 30 à 130°C 10,6 Pa.s
- viscosité à 140°C 6,9 Pa.s
- teneur en NCO 2,8% (Th : 2,77%)
- cohésion initiale:
. après 15 s: léger fluage sous 150 g
. après 30 s: pas de fluage sous 350 g
. après 1 mn: pas de fluage sous 350 g

- évolution de la tenue SAFT dans le temps:

| Temps écoulé (j) | 1 | 2 | 3 | 4 | 5 | 6 |
|---|---|---|---|---|---|---|
| SAFT (250 g) | 77 | 78 | 114 | 164 | 175 | >200 |
| SAFT (500 g) | 67 | 71 | 74 | 88 | 120 | 130 |

### Essai de référence

Il est rigoureusement identique à l'essai de l'exemple 2, mais le terpolymère selon l'invention est remplacé par un copolymère éthylène/vinylacétate 33/400 en quantité identique (rapport NCO/OH total de 2,3). L'adhésif obtenu a les caractéristiques suivantes:
- transparent et homogène à 130°C
- viscosité à 130°C 8,1 Pa.s
- viscosité à 130°C après 4 h 30 à 130°C 9,1 Pa.s
- viscosité à 140°C 5,9 Pa.s
- teneur en NCO 2,6% (Th : 3%)
- cohésion initiale:
. après 15 s: cohésion nulle sous 150 g
. après 30 s: cohésion nulle sous 150 g
. après 1 mn: léger fluage sous 150 g

- évolution de la tenue SAFT dans le temps:

| Temps écoulé (j) | 1 | 2 | 3 | 4 | 5 | 6 |
|---|---|---|---|---|---|---|
| SAFT (250 g) | 65 | 67 | 78 | 95 | 90 | 95 |
| SAFT (500 g) | 64 | 65 | 67,5 | 72 | 75 | 72 |

L'amélioration de la tenue SAFT due au terpolymère de l'invention est là encore de l'ordre de 60°C.

### EXEMPLE 3

Cet exemple est destiné à illustrer l'importance des caractéristiques du terpolymère selon l'invention et, en particulier, de sa teneur en groupe OH, ici déterminé par la teneur en acrylate d'hydroxyéthyle.

On introduit dans le réacteur décrit à l'exemple 1, 80 g d'un terpolymère éthylène/vinylacétate/hydroxyéthylacrylate et 70,7 g de Krystalex F-85. Le terpolymère a les caractéristiques suivantes: 66,9% éthylène, 29,5% VA, 3,6% HEA, MI = 1250, Mn = 5 490, Mw = 44 800, méq OH = 31. Après séchage, on ajoute 17,75 g de 1-dodécanol sec puis 31,52 g de MDI (soit un rapport NCO/OH de 2,1, identique à celui de l'exemple 1). On constate, au bout de 30 mn, une prise en masse du milieu réactionnel (gélification) obligeant à interrompre la réaction. Le même résultat est obtenu avec un terpolymère présentant les caractéristiques suivantes: 68,7% éthylène, 27,8% VA, 2,6% HEA, MI = 400, Mn = 5 700, Mw = 57 000, méq OH = 22,5.
Ces terpolymères ne peuvent donc être utilisés seuls pour l'application visée par suite de leur teneur trop élevée en fonction hydroxyle (> 20 méq OH/100 g). Une teneur en hydroxyle supérieure à 20 méq est décrite et exemplifiée dans EP-A-0 380 379.

### EXEMPLE 4

Cet exemple démontre qu'on peut utiliser un terpolymère à forte teneur en HEA à condition de la diluer par un copolymère EVA non hydroxylé, de sorte à retrouver une teneur en OH inférieure à 20 méq.

On introduit dans le réacteur décrit à l'exemple 1, 40 g du terpolymère EVA/HEA décrit en fin d'exemple 3 (2,6% HEA), 40 g d'un EVA commercial (33% VA, MI = 400) et 68 g de Krystalex F-85. Après séchage, on verse alors 20 g de 1-dodécanol puis 32 g de MDI (soit un rapport NCO/OH de 2,1, identique à celui de l'exemple 3). Après 4 h 30 de réaction, on obtient un hot melt présentant les caractéristiques suivantes:
- transparent et homogène à 130°C
- viscosité à 130°C 7 Pa.s
- teneur en NCO 2,84%
- cohésion initiale:
. après 15 s: nulle sous 150 g
. après 30 s: nulle sous 150 g
. après 1 mn: léger fluage sous 250 g

- évolution de la tenue SAFT dans le temps:

| Temps écoulé (j) | 1 | 2 | 3 | 4 | 5 | 6 |
|---|---|---|---|---|---|---|
| SAFT (250 g) | 57 | 66 | 69 | 163 | 170 | 180 |
| SAFT (500 g) | 51 | 64 | 66 | 68 | 90 | 90 |

### EXEMPLE 5

Cet exemple démontre qu'un terpolymère selon l'invention à 2,2% HEA peut être utilisé pur pour cette application.

Le terpolymère testé possède les caractéristiques suivantes: 70,3% éthylène, 27,5% VA, 2,2% HEA, MI: 550, Mn = 5 750, Mw = 46 000, méq OH = 19.

On introduit dans le réacteur de l'exemple 1, 80 g du terpolymère précité et 68,5 g de Krystalex F-85. Après séchage, on ajoute 19,5 g de 1-dodécanol sec puis 32 g de MDI (soit un rapport NCO total/OH total de 2,1). On récupère après la réaction habituelle, un hot melt possédant les caractéristiques suivantes:
- transparent et homogène à 130°C
- viscosité à 130°C 9 200 cps
- viscosité après 4 h à 130°C 10 810 cps
- teneur en NCO 2,9%
- cohésion initiale:
. après 15 s: cohésion nulle sous 150 g
. après 30 s: très léger fluage sous 250 g
. après 1 mn: pas de fluage sous 350 g

- évolution de la tenue SAFT dans le temps:

| Temps écoulé (j) | 1 | 2 | 3 | 4 | 5 | 6 | 12 | 24 |
|---|---|---|---|---|---|---|---|---|
| SAFT (250 g) | 67 | 71 | 90 | 160 | 170 | >200 | >200 | >200 |
| SAFT (500 g) | 65 | 68 | 70 | 75 | 160 | 170 | >200 | >200 |

### Dureté Shore

L'évolution de la dureté du hot melt a été mesurée simultanément sur une plaque massive d'adhésif de 2 mm d'épaisseur obtenue par moulage à 130°C. La variation est la suivante:

| | | | | | | | | |
|---|---|---|---|---|---|---|---|---|
| Temps (j) | 1 | 3 | 6 | 9 | 12 | 17 | 24 | 30 |
| Dureté Shore A | 18 | 25 | 39 | 48 | 55 | 65 | 71 | 72 |

La lenteur de la réticulation est due à la forte épaisseur de l'échantillon. Après un mois de stockage, la plaque d'adhésif reste souple et non cassante.

### Caractéristiques mécaniques en traction (après réticulation)

Elles ont été mesurées sur éprouvettes halteres type H2 (norme NFT 51-034) découpées dans une plaque massive d'adhésif de 2 mm d'épaisseur.

Nous avons utilisé comme témoin un mélange EVA 33/400 commercial/Krystalex F-85 en proportion 40/60 en poids, c'est-à-dire avec la même teneur en EVA que notre formulation modifiée.

Les résultats sont les suivants (vitesse de traction 50 mm/mn):

| | Formulation selon l'invention | | Témoin (non réticulable) |
|---|---|---|---|
| | après 12 j | après 24 j | |
| . Allongement à la rupture (%) | 600 | 600 | >1 000 |
| . Résistance maxi en traction (MPa) | 1 | 2,3 | 0,7 |

### EXEMPLE 6

Cet illustre l'utilisation d'autres dérivés hydroxylés que le dodécanol pour détruire l'excès de MDI utilisé. Le terpolymère selon l'invention utilisé possède les caractéristiques suivantes: 69,8% éthylène, 29% VA, 1,2% HEA, MI 900, Mw 6 430, Mn 39 900, méq OH = 10,3. On introduit dans le réacteur de l'exemple 1, 80 g du terpolymère ci-dessus, 47,5 g de Bevilite 6285 (résine Hercules d'indice OH 24) et 41 g de résine 8941 bis (résine DRT d'indice d'OH 125). Après séchage des constituants, on introduit 31,5 g de MDI soit un rapport NCO/OH de 2,1. Après la réaction habituelle, on obtient un adhésif hot melt offrant les caractéristiques suivantes:
- transparent à 130°C
- viscosité à 130°C 15,5 Pa.s
- viscosité après 4 h à 130°C 23 Pa.s
- teneur en NCO 3,05%
- cohésion initiale:
. après 15 s: fluage sous 250 g
. après 30 s: fluage sous 350 g
. après 1 mn: pas de fluage sous 350 g

- évolution de la tenue SAFT dans le temps:

| Temps écoulé (j) | 1 | 2 | 3 | 4 | 5 | 6 |
|---|---|---|---|---|---|---|
| SAFT (250 g) | 67 | 96 | >200 | >200 | >200 | >200 |
| SAFT (500 g) | 66 | 72 | 125 | 150 | 160 | 180 |

### EXEMPLE 7

Cet exemple illustre l'utilisation d'un rapport molaire NCO total/OH total plus faible. Le terpolymère utilisé est le même qu'à l'exemple 5. On introduit dans le réacteur de l'exemple 1, 80 g du terpolymère de l'exemple 5 et 71,5 g de Krystalex F-85. Après séchage habituel, on ajoute 19,5 g de 1-dodécanol sec puis 29 g de MDI (soit un rapport NCO/OH de 1,9). L'adhésif thermofusible récupéré après 4 h 30 de réaction à 125°C possède les caractéristiques suivantes:
- transparent et homogène à 130°C
- viscosité à 130°C 11,1 Pa.s
- viscosité après 4 h à 130°C 12,9 Pa.s
- viscosité à 140°C 7,5 Pa.s
- teneur en NCO 2,15%
- cohésion initiale:
. après 15 s: pas de fluage sous 150 g
. après 30 s et 60 s: pas de fluage sous 350 g

- évolution de la tenue SAFT dans le temps:

| Temps écoulé (j) | 1 | 2 | 3 | 4 | 5 | 6 |
|---|---|---|---|---|---|---|
| SAFT (250 g) | 67 | 69 | 70 | 76 | 89 | 173 |
| SAFT (500 g) | 66 | 67 | 67 | 69 | 72 | 162 |

On remarquera que l'augmentation de viscosité liée à la diminution du rapport NCO/OH reste tout à fait acceptable.

## Revendications

1. Composition adhésive thermofusible, à base d'un copolymère EVA et de polyisocyanate, caractérisée en ce que ledit copolymère EVA est un copolymère d'indice de fluidité à 190°C compris entre 100 et 1 000 et comprenant, par rapport au poids dudit copolymère:
1) 10 à 90% d'éthylène,
2) 10 à 40% d'acétate de vinyle,
3) 5 à 20 méq OH d'un termonomère éthyléniquement insaturé portant au moins une fonction hydroxyle primaire par mole,
ladite composition contenant des fonctions isocyanates libres.

2. Composition selon la revendication 1, caractérisée en ce que ledit copolymère EVA comprend, en poids par rapport au poids dudit copolymère:
a) 65 à 80% d'éthylène,
b) 20 à 35% d'acétate de vinyle,
c) 10 à 20 méq OH d'un termonomère éthyléniquement insaturé portant au moins une fonction hydroxyle primaire par mole.

3. Composition selon la revendication 1 ou 2, caractérisée en ce que ledit copolymère a un indice de fluidité à 190°C compris entre 400 et 800.

4. Composition selon l'une quelconque des revendications 1 à 3, caractérisée en ce que ledit termonomère correspond à la formule: 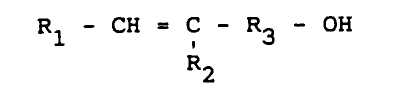 dans laquelle:
R₁ représente l'hydrogène ou un radical hydrocarboné contenant de 1 à 8 atomes de carbone;
R₂ représente l'hydrogène ou un radical hydrocarboné contenant de 1 à 4 atomes de carbone;
R₃ représente un groupement ester, amide ou (CH₂)ₙ**,** n étant compris entre 0 et 10, inclus.

5. Composition selon la revendication 4, caractérisée en ce que ledit termonomère est le méthacrylate de 2-hydroxyéthyle (HEMA) ou l'acrylate de 2-hydroxyéthyle (HEA).

6. Composition selon l'une quelconque des revendications 1 à 5, caractérisée en ce que le polyisocyanate est un diisocyanate.

7. Composition selon la revendication 6, caractérisée en ce que le diisocyanate est choisi dans le groupe consistant en: 2,4-toluylène-diisocyanate (TDI), diphénylméthanediisocyanate (MDI), hexaméthylène-diisocyanate (HMDI), et isophorone-diisocyanate (IPDI).

8. Composition selon l'une quelconque des revendications 1 à 7, caractérisée en ce qu'elle comprend de 1 à 5% en poids de fonctions isocyanates libres.

9. Composition selon l'une quelconque des revendications 1 à 8, caractérisée en ce qu'elle comprend de plus une résine tackéfiante, selon un rapport en poids résine/polymère au plus égal à 3.

10. Procédé de préparation d'une composition selon l'une quelconque des revendications 1 à 9, caractérisé en ce qu'il comprend les étapes suivantes:
(i) fusion et séchage du copolymère EVA, éventuellement de la résine;
(ii) addition et réaction d'un alcool et du polyisocyanate jusqu'à obtention du taux de NCO recherché.

## Patentansprüche

1. Schmelzkleberzusammensetzung auf der Basis eines Ethylen-Vinylacetat(EVA)-Copolymers und von Polyisocyanat,
dadurch gekennzeichnet, daß
das EVA-Copolymer ein Copolymer mit einem Fließindex bei 190 °C von 100 bis 1000 ist und, bezogen auf das Gewicht des Copolymers, enthält:
1) 10 bis 90 % Ethylen,
2) 10 bis 40 % Vinylacetat und
3) ein ethylenisch ungesättigtes drittes Comonomer, das mindestens eine primäre Hydroxygruppe pro Molekül enthält, in einer Menge, die einem OH-Äquivalent von 5 bis 20 mmol OH/100 g Copolymer entspricht,
wobei die Zusammensetzung freie Isocyanatgruppen aufweist.

2. Schmelzkleberzusammensetzung nach Anspruch 1, dadurch gekennzeichnet, daß das EVA-Copolymer, bezogen auf das Gewicht des Copolymers, enthält:
a) 65 bis 80 % Ethylen,
b) 20 bis 35 % Vinylacetat und
c) ein ethylenisch ungesättigtes drittes Comonomer, das mindestens eine primäre Hydroxygruppe pro Molekül enthält, in einer Menge, die einem OH-Äquivalent von 10 bis 20 mmol OH/100 g Copolymer entspricht.

3. Schmelzkleberzusammensetzung nach Anspruch 1 oder 2, dadurch gekennzeichnet, daß das Copolymer einen Fließindex bei 190 °C von 400 bis 800 aufweist.

4. Schmelzkleberzusammensetzung nach einem der Ansprüche 1 bis 3, dadurch gekennzeichnet, daß das dritte Comonomer der Formel 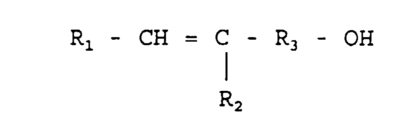 entspricht, in der bedeuten:
R₁ Wasserstoff oder eine Kohlenwasserstoffgruppe mit 1 bis 8 Kohlenstoffatomen,
R₂ Wasserstoff oder eine Kohlenwasserstoffgruppe mit 1 bis 4 Kohlenstoffatomen,
und
R₃ eine Estergruppe, eine Amidgruppe oder (CH₂)ₙ, wobei n 0 bis 10 bedeutet.

5. Schmelzkleberzusammensetzung nach Anspruch 4, dadurch gekennzeichnet, daß das dritte Comonomer 2-Hydroxyethylmethacrylat (HEMA) oder 2-Hydroxyethylacrylat (HEA) ist.

6. Schmelzkleberzusammensetzung nach einem der Ansprüche 1 bis 5, dadurch gekennzeichnet, daß das Polyisocyanat ein Diisocyanat ist.

7. Schmelzkleberzusammensetzung nach Anspruch 6, dadurch gekennzeichnet, daß das Diisocyanat unter 2,4-Toluylendiisocyanat (TDI), Diphenylmethandiisocyanat (MDI), Hexamethylendiisocyanat (HMDI) und Isophorondiisocyanat (IPDI) ausgewählt ist.

8. Schmelzkleberzusammensetzung nach einem der Ansprüche 1 bis 7, dadurch gekennzeichnet, daß sie 1 bis 5 Gew.-% freie Isocyanatgruppen aufweist.

9. Schmelzkleberzusammensetzung nach einem der Ansprüche 1 bis 8, dadurch gekennzeichnet, daß sie ferner ein klebrigmachendes Harz enthält, wobei das Gewichtsverhältnis klebrigmachendes Harz/Polymer höchstens gleich 3 ist.

10. Verfahren zur Herstellung einer Schmelzkleberzusammensetzung nach einem der Ansprüche 1 bis 9, dadurch gekennzeichnet, daß es folgende Stufen umfaßt:
(i) Schmelzen und Trocknen des EVA-Copolymers und ggf. des Harzes
und
(ii) Zugabe und Umsetzung eines Alkohols und des Polyisocyanats bis zur Erzielung des gewünschten Gehalts an NCO-Gruppen.

## Claims

1. Hot-melt adhesive composition based on an EVA copolymer and polyisocyanate, characterized in that the said EVA copolymer is a copolymer with a melt index at 190°C of between 100 and 1000 and containing, relative to the weight of the said copolymer:
1) 10 to 90 % of ethylene,
2) 10 to 40 % of vinyl acetate,
3) 5 to 20 meq. OH of an ethylenically unsaturated termonomer bearing at least one primary hydroxyl functional group per mole,
the said composition containing free isocyanate functional groups.

2. Composition according to Claim 1, characterized in that the said EVA copolymer contains, by weight relative to the weight of the said copolymer:
a) 65 to 80 % of ethylene,
b) 20 to 35 % of vinyl acetate,
c) 10 to 20 meq. OH of an ethylenically unsaturated termonomer bearing at least one primary hydroxyl functional group per mole.

3. Composition according to Claim 1 or 2, characterized in that the said copolymer has a melt index at 190°C of between 400 and 800.

4. Composition according to any one of Claims 1 to 3, characterized in that the said termonomer corresponds to the formula: 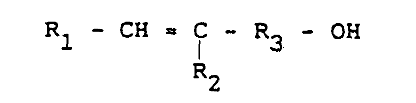 in which:
R₁ denotes hydrogen or a hydrocarbon radical containing from 1 to 8 carbon atoms;
R₂ denotes hydrogen or a hydrocarbon radical containing from 1 to 4 carbon atoms;
R₃ denotes an ester, amide or (CH₂)ₙ group, n being between 0 and 10 inclusive.

5. Composition according to Claim 4, characterized in that the said termonomer is 2-hydroxyethyl methacrylate (HEMA) or 2-hydroxyethyl acrylate (HEA).

6. Composition according to any one of Claims 1 to 5, characterized in that the polyisocyanate is a diisocyanate.

7. Composition according to Claim 6, characterized in that the diisocyanate is chosen from the group consisting of: 2,4-toluylene diisocyanate (TDI), diphenylmethane diisocyanate (MDI), hexamethylene diisocyanate (HMDI) and isophorone diisocyanate (IPDI).

8. Composition according to any one of Claims 1 to 7, characterized in that it contains from 1 to 5 % by weight of free isocyanate functional groups.

9. Composition according to any one of Claims 1 to 8, characterized in that it additionally contains a tackifying resin in a resin/polymer weight ratio of not more than 3.

10. Process for the preparation of a composition according to any one of Claims 1 to 9, characterized in that it comprises the following stages:
(i) melting and drying of the EVA copolymer, optionally of the resin;
(ii) addition and reaction of an alcohol and of the polyisocyanate until the required NCO content is obtained.
